# EUROPÄISCHE PATENTANMELDUNG

(11) **EP 4 151 325 A1**
(43) Veröffentlichungstag der Anmeldung: **22.03.2023**
(21) Anmeldenummer: 21197209.6
(22) Anmeldetag: 16.09.2021
(51) Int. Cl.: B21B 38/02

(54) **PLANHEITSERKENNUNG BEI EINEM FLACHEM WALZGUT**

(71) Anmelder: Primetals Technologies Germany GmbH, 91058 Erlangen (DE)
(72) Erfinder: Kerschensteiner, Martin, 92348 Berg (DE); Thekale, Alexander, 91058 Erlangen (DE)
(74) Vertreter: Metals@Linz

(57) **Zusammenfassung**

In einem Walzgerüst (1) wird ein flaches Walzgut (2) aus Metall gewalzt. Das Walzgut (2) läuft in einer Transportrichtung (x) aus dem Walzgerüst (1) aus. Mittels einer kontaktlos und ohne mechanische Einwirkung auf das flache Walzgut (2) arbeitenden Erfassungseinrichtung (8) wird auslaufseitig des Walzgerüsts (1) iterativ immer wieder mindestens ein zweidimensionaler Datensatz (D) der Oberfläche des flachen Walzguts (2) erfasst. Die Datenwerte (DW) des Datensatzes (D) sind von der lokalen äußeren Planheit und/oder inneren Spannung am jeweils korrespondierenden Ort des flachen Walzguts (2) abhängig. Eine Auswertungseinrichtung (9) ermittelt für in Transportrichtung (x) verlaufende Streifen (13) des flachen Walzguts (2) unter Verwertung von mit den Streifen (13) korrespondierenden Streifen (12) des jeweiligen Datensatzes (D) einen auf den jeweiligen Streifen (13, 12) bezogenen vom Planheitsfehler abhängigen Fehlerwert (PF). Die Auswertungseinrichtung (9) führt die ermittelten Fehlerwerte (PF) einer Steuereinrichtung (14) zu, welche die Fehlerwerte (PF) bei der Ermittlung von Stellgrößen (S) für Planheitsstellglieder (5, 6) des Walzgerüsts (1) berücksichtigt. Durch das Zusammenwirken von Erfassungseinrichtung (8), Auswertungseinrichtung (9), Steuereinrichtung (14) und Walzgerüst (1) ergibt sich somit ein in Echtzeit arbeitender geschlossener Regelkreis. Zur Ermittlung des jeweiligen Fehlerwertes (PF) eines Streifens (13) führt die Auswertungseinrichtung (9) eine örtliche Frequenzanalyse des korrespondierenden Streifens (12) des jeweiligen zweidimensionalen Datensatzes (D) durch und ermittelt den jeweiligen Fehlerwert (PF) anhand der örtlichen Frequenzanalyse.

## Beschreibung

### Gebiet der Technik

Die vorliegende Erfindung geht aus von einem Betriebsverfahren für eine Walzanordnung,
- wobei mittels eines Walzgerüsts der Walzanordnung ein sich in einer Breitenrichtung über eine Walzgutbreite erstreckendes flaches Walzgut aus Metall gewalzt wird, wobei das flache Walzgut nach dem Walzen in einer Transportrichtung aus dem Walzgerüst ausläuft,
- wobei mittels einer kontaktlos und ohne mechanische Einwirkung auf das flache Walzgut arbeitenden Erfassungseinrichtung auslaufseitig des Walzgerüsts iterativ immer wieder mindestens ein zweidimensionaler Datensatz der Oberfläche des flachen Walzguts erfasst wird, dessen Werte von der lokal am jeweils korrespondierenden Ort des flachen Walzguts herrschenden äußeren Planheit und/oder von der lokal am jeweils korrespondierenden Ort des flachen Walzguts herrschenden inneren Spannung abhängig sind,
- wobei der jeweilige zweidimensionale Datensatz von einer Auswertungseinrichtung der Walzanordnung entgegengenommen wird, die für in Transportrichtung verlaufende Streifen des flachen Walzguts unter Verwertung von mit den Streifen korrespondierenden Streifen des jeweiligen zweidimensionalen Datensatzes jeweils einen auf den jeweiligen Streifen bezogenen, vom Planheitsfehler abhängigen Fehlerwert ermittelt,
- wobei die Auswertungseinrichtung die ermittelten Fehlerwerte einer Steuereinrichtung der Walzanordnung zuführt, die ihrerseits die ermittelten Fehlerwerte bei der Ermittlung von Stellgrößen für Planheitsstellglieder des Walzgerüsts berücksichtigt,
- so dass sich durch das Zusammenwirken von Erfassungseinrichtung, Auswertungseinrichtung, Steuereinrichtung und Walzgerüst ein in Echtzeit arbeitender geschlossener Regelkreis ergibt.

Damit der Regelkreis in Echtzeit arbeiten kann, müssen die genannten Bestandteile der Walzanordnung ihre Aufgaben mit einem festen Arbeitstakt immer wieder ausführen. Der Arbeitstakt liegt in der Regel im Millisekundenbereich, meist im zweistelligen Millisekundenbereich, in Ausnahmefällen im unteren dreistelligen Millisekundenbereich. Dies gilt sowohl im Stand der Technik als auch im Rahmen der vorliegenden Erfindung.

Die vorliegende Erfindung geht weiterhin aus von einem Computerprogramm, wobei das Computerprogramm Maschinencode umfasst, der von einer Auswertungseinrichtung einer Walzanordnung unmittelbar abarbeitbar ist, wobei die Abarbeitung des Maschinencodes durch die Auswertungseinrichtung bewirkt, dass die Auswertungseinrichtung mit einer Erfassungseinrichtung, einer Steuereinrichtung und einem Walzgerüst der Walzanordnung gemäß einem derartigen Betriebsverfahren zusammenwirkt.

Die vorliegende Erfindung geht weiterhin aus von einer Auswertungseinrichtung einer Walzanordnung, wobei die Auswertungseinrichtung mit einem derartigen Computerprogramm programmiert ist, so dass die Auswertungseinrichtung mit einer Erfassungseinrichtung, einer Steuereinrichtung und einem Walzgerüst der Walzanordnung gemäß einem derartigen Betriebsverfahren zusammenwirkt.

Die vorliegende Erfindung geht weiterhin aus von einer Walzanordnung,
- wobei die Walzanordnung ein Planheitsstellglieder umfassendes Walzgerüst aufweist, mittels dessen ein sich in einer Breitenrichtung über eine Walzgutbreite erstreckendes flaches Walzgut aus Metall gewalzt wird, wobei das flache Walzgut nach dem Walzen in einer Transportrichtung aus dem Walzgerüst ausläuft,
- wobei die Walzanordnung eine kontaktlos und ohne mechanische Einwirkung auf das flache Walzgut arbeitende Erfassungseinrichtung aufweist, mittels derer auslaufseitig des Walzgerüsts iterativ immer wieder mindestens ein zweidimensionaler Datensatz der Oberfläche des flachen Walzguts erfasst wird, dessen Werte von der lokal am jeweils korrespondierenden Ort des flachen Walzguts herrschenden äußeren Planheit und/oder von der lokal am jeweils korrespondierenden Ort des flachen Walzguts herrschenden inneren Spannung abhängig sind,
- die Walzanordnung eine mit der Erfassungseinrichtung zum wiederholten Entgegennehmen von zweidimensionalen, mittels der Erfassungseinrichtung erfassten Datensätzen der Oberfläche des flachen Walzguts datentechnisch verbundene derartige Auswertungseinrichtung aufweist, die für in Transportrichtung verlaufende Streifen des flachen Walzguts unter Verwertung von mit den Streifen korrespondierenden Streifen des jeweiligen zweidimensionalen Datensatzes jeweils einen auf den jeweiligen Streifen bezogenen, vom Planheitsfehler abhängigen Fehlerwert ermittelt und die ermittelten Fehlerwerte einer Steuereinrichtung der Walzanordnung zuführt,
- wobei die Steuereinrichtung die ermittelten Fehlerwerte bei der Ermittlung von Stellgrößen für die Planheitsstellglieder des Walzgerüsts berücksichtigt.

### Stand der Technik

Ein derartiges Betriebsverfahren und die zugehörigen korrespondierenden Gegenstände sind aus der US 2015/0 116 727 A1 bekannt. Insbesondere ist aus der US 2015/0 116 727 A1 bekannt, mittels einer oder mehrerer Kameras zeilenweise Bilder eines jeweiligen Abschnitts eines Metallbandes zu erfassen. Während der Erfassung der jeweiligen Zeile wird der entsprechende Bereich des Metallbandes mit einer gleichmäßigen Intensität beleuchtet. Durch mehrfache Erfassung von Zeilen wird ein zweidimensionales Bild der Oberfläche des Metallbandes generiert. Das Bild wird in einzelne Streifen unterteilt. Die Streifen können in Längsrichtung des Walzguts verlaufen. Sie werden dahingehend ausgewertet, ob in ihnen Dellen (hollow bump) erkannt werden. Werden derartige Dellen erkannt, wird dies als lokaler Planheitsfehler registriert. Die ermittelten Planheitsfehler können einem vorgeordneten Walzgerüst als Korrekturwerte zur Ermittlung der Ansteuerung von dessen Planheitsstellgliedern zugeführt werden.

Aus der WO 2019/068 376 A1 ist bekannt, auslaufseitig eines Walzgerüsts mittels einer segmentierten Messrolle ortsaufgelöst über die Breite eines Metallbandes die Planheit des Metallbandes zu erfassen. In Abhängigkeit von der erfassten Planheit werden Stellglieder des Walzgerüsts angesteuert, um die Planheit so weit wie möglich an eine Sollplanheit anzunähern.

Aus der WO 2021/105 364 A2 ist bekannt, mittels einer Kamera Bilder der Oberfläche eines Metallbandes zu erfassen und durch Auswerten der Bilder die lokale Oberflächenbeschaffenheit zu ermitteln. Als Beispiele für die lokale Oberflächenbeschaffenheit sind die Oberflächenrauheit, Dellen, die Farbe, die Helligkeit, die chemische Zusammensetzung und andere Eigenschaften der Oberfläche genannt. Ausgehend von der ermittelten lokalen Oberflächenbeschaffenheit wird die Steuerung einer vorgeordneten Einrichtung beeinflusst. Die Einrichtung kann ein Kaltwalzwerk sein.

### Zusammenfassung der Erfindung

Beim Walzen eines flachen Walzguts aus Metall, beispielsweise eines Metallbandes, ist es das ständige Bestreben, ein flaches Walzgut herzustellen, das sowohl in sich spannungsfrei ist als auch nach außen hin verzerrungsfrei und damit plan ist. Wird ein flaches Walzgut in Breitenrichtung gesehen völlig gleichmäßig gewalzt, d.h. mit einer in Breitenrichtung gesehen einheitlichen relativen Stichabnahme, ist dies der Fall. Erfolgt eine in Breitenrichtung ungleichmäßige Walzung, werden (in Breitenrichtung gesehen) manche Längsstreifen des flachen Walzguts stärker gewalzt als andere Längsstreifen des flachen Walzguts. Das flache Walzgut bildet daher in den stärker gewalzten Längsstreifen Wellen aus. Es wird unplan, die äußere (= sichtbare) Planheit ist von 0 verschieden. Bei kleinen Längenunterschieden oder wenn das flache Walzgut mit einem Zug beaufschlagt wird, ist die äußere Planheit zwar gleich 0. Im Falle der Beaufschlagung mit Zug resultieren aus den Längenunterschieden jedoch innere Zugspannungsunterschiede. In diesem Fall ist also die innere Spannung des flachen Walzguts von 0 verschieden.

Zum Ausgleichen und Kompensieren von Planheitsfehlern sind im Stand der Technik verschiedene Vorgehensweisen bekannt. Es kann auf die bereits genannte US 2015/0 116 727 A1 und auch auf die ebenfalls bereits genannte WO 2019/068 376 A1 verwiesen werden.

Die Umweltbedingungen beim Walzen eines flachen Walzguts aus Metall sind oftmals herausfordernd, beispielsweise durch hohe Temperaturen, Vibration, Wasser bzw. Wasserdampf, Öldämpfe sowie Schmutz- und Rostpartikel. Dies erschwert den Betrieb von Messgeräten zum Erfassen von Fehlerwerten und führt oftmals zu einem hohen Platzbedarf.

Die Aufgabe der vorliegenden Erfindung besteht darin, Möglichkeiten zu schaffen, mittels derer auf einfache und zuverlässige Weise Planheitsfehler des flachen Walzguts erkannt und korrigiert werden können.

Die Aufgabe wird durch ein Betriebsverfahren mit den Merkmalen des Anspruchs 1 gelöst. Vorteilhafte Ausgestaltungen des Betriebsverfahrens sind Gegenstand der abhängigen Ansprüche 2 bis 12.

Erfindungsgemäß wird ein Betriebsverfahren der eingangs genannten Art dadurch ausgestaltet, dass die Auswertungseinrichtung zur Ermittlung des jeweiligen Fehlerwertes eines Streifens eine örtliche Frequenzanalyse des mit dem jeweiligen Streifen korrespondierenden Streifens des jeweiligen zweidimensionalen Datensatzes durchführt und den jeweiligen Fehlerwert anhand der örtlichen Frequenzanalyse ermittelt.

Die örtliche Frequenzanalyse kann beispielsweise eine Fouriertransformation sein. In jedem Fall aber werden durch die Frequenzanalyse die Intensitäten von örtlichen Schwingungen und deren jeweilige Ortsfrequenz ermittelt.

Im einfachsten Fall ist die Erfassungseinrichtung als Kameraeinrichtung ausgebildet, mittels derer als jeweiliger zweidimensionaler Datensatz ein jeweiliges zweidimensionales Bild der Oberfläche des flachen Walzguts erfasst oder aufgrund von erfassten Bilddaten ermittelt wird. Die Kameraeinrichtung kann insbesondere als "normale" Kamera ausgebildet sein, mittels derer direkt ein zweidimensionales Bild erfasst wird. Alternativ können auch mehrere derartige Kameras verwendet werden, so dass dementsprechend auch mehrere zweidimensionale Datensätze erfasst werden. Auch kann es sich bei der Kameraeinrichtung um eine Zeilenkamera handeln. Alternativ können auch mehrere derartige Zeilenkameras verwendet werden. Kameras, die in Walzwerken eingesetzt werden können, sind Fachleuten allgemein bekannt. Mit ihnen kann - je nach Ausgestaltung der Kamera - Licht im sichtbaren Spektrum und/oder im Infrarotbereich erfasst werden. In konstruktiver Hinsicht kann die Kamera beispielsweise als CCD-Kamera ausgebildet sein.

Die erfassten Bilder können normale Intensitätsbilder sein. Alternativ kann es sich um sogenannte Tiefenbilder handeln, bei denen dem jeweiligen Ort im zweidimensionalen Bild bzw. Datensatz auch eine Tiefeninformation zugeordnet ist, so dass sich im Ergebnis ein dreidimensionales Bild ergibt. Gegebenenfalls können auch durch mehrere Kameras mehrere "normale" zweidimensionale Bilder erfasst werden, aus denen beispielsweise durch Fusion der erfassten Bilder ein Tiefenbild ermittelt und an die Auswertungseinrichtung übermittelt wird.

Es ist möglich, dass der Kameraeinrichtung eine Beleuchtungseinrichtung zugeordnet ist, mittels derer eine definierte Ausleuchtung des mittels der Kameraeinrichtung erfassten Bildbereichs erfolgt. Gegebenenfalls kann die Beleuchtungseinrichtung die Ausleuchtung des erfassten Bildbereichs modulieren. Dadurch kann unter Umständen das Signal-RauschVerhältnis verbessert werden.

Vorzugsweise wird mittels der zweidimensionalen Datensätze die Oberfläche des flachen Walzguts über die gesamte Breite des flachen Walzguts erfasst. Dadurch kann die Auswertung des jeweiligen zweidimensionalen Datensatzes verbessert werden.

Der Begriff "über die gesamte Breite" impliziert, dass die zweidimensionalen Datensätze auch die Seitenkanten des flachen Walzguts mit umfassen. Somit kann im Rahmen der Auswertung der zweidimensionalen Datensätze insbesondere auch die Lage der Seitenkanten mit berücksichtigt werden.

Vorzugsweise ist die Erfassungseinrichtung in einer durch die Breitenrichtung und die Transportrichtung definierten Ebene gesehen mittig über dem flachen Walzgut angeordnet. Die Anordnung der Erfassungseinrichtung kann also derart sein, dass eine Linie, die von der Erfassungseinrichtung zum flachen Walzgut verläuft und orthogonal zur Oberfläche des flachen Walzguts orientiert ist, mittig auf das flache Walzgut trifft. In diesem Fall ist die Erfassungseinrichtung direkt oder nahezu direkt über dem flachen Walzgut bzw. dem erfassten Bereich des flachen Walzguts angeordnet.

In vielen Fällen umfassen die Planheitsstellglieder des Walzgerüsts lokal wirkende Stellglieder, mittels derer jeweils nur ein Abschnitt der oberen Arbeitswalze und/oder der unteren Arbeitswalze des Walzgerüsts beeinflusst wird. Bei derartigen nur lokal wirkenden Stellgliedern kann es sich insbesondere um Kühleinrichtungen handeln, mittels derer nur auf den jeweiligen Abschnitt der entsprechenden Arbeitswalze ein Kühlmittel aufgebracht werden kann. Wenn lokal wirkende Stellglieder vorhanden sind, korrespondieren die Streifen des flachen Walzgutes vorzugsweise jeweils mit einem Abschnitt der oberen Arbeitswalze und/oder der unteren Arbeitswalze. Dadurch kann eine 1:1-Beziehung zwischen ermittelten Fehlerwerten einerseits und zugehörigen Steuergrößen für die lokal wirkenden Stellglieder hergestellt werden.

Vorzugsweise selektiert die Auswertungseinrichtung zur Ermittlung des jeweiligen Fehlerwertes eines Streifens ein Segment des jeweiligen Streifens, wobei das Segment sich in Transportrichtung des flachen Walzguts gesehen über die gesamte Länge des jeweiligen Streifens und in Breitenrichtung des flachen Walzguts gesehen nur über einen Teil der Breite des jeweiligen Streifens erstreckt. In diesem Fall führt die Auswertungseinrichtung die örtliche Frequenzanalyse nur bezüglich des Segments des jeweiligen Streifens durch. Dies vereinfacht die Ermittlung des jeweiligen Fehlerwertes.

Es ist möglich, dass die Auswertungseinrichtung vor der Durchführung der Frequenzanalyse eine Vorverarbeitung des jeweiligen zweidimensionalen Datensatzes vornimmt.

Die Vorverarbeitung kann beispielsweise eine Glättung (Frequenzfilterung) sein. Alternativ oder zusätzlich kann es sich um die Eliminierung von Artefakten handeln. Die Artefakte können beispielsweise durch die Erfassungsanordnung als solche hervorgerufene Fehler sein. Alternativ können die Artefakte beispielsweise durch auf der Oberfläche befindliche Substanzen (beispielsweise Zunder) hervorgerufen werden. Auch ist es möglich, eine Erkennung der Seitenkanten des flachen Walzguts vorzunehmen und deren Lage bei der Auswertung des zweidimensionalen Datensatzes mit zu berücksichtigen. Insbesondere ist es möglich, dass nur solche Streifen gebildet und/oder ausgewertet werden, die sich vollständig innerhalb der Seitenkanten des flachen Walzguts befinden. Alternativ ist es auch möglich, die Auswertung nur dann vorzunehmen, wenn ein zur Ermittlung des Fehlerwertes verwertetes Segment eines jeweiligen Streifens sich vollständig innerhalb der Seitenkanten des flachen Walzguts befindet.

Oftmals sind die Datenwerte Intensitätswerte. In derartigen Fällen kann die Vorverarbeitung eine Normierung der Intensitätswerte bezüglich des maximal möglichen Wertebereichs der Werte des zweidimensionalen Datensatzes und, bezogen auf den jeweiligen Streifen oder ein Segment des jeweiligen Streifens, eine Bereinigung um den Mittelwert der Datenwerte des jeweiligen Streifens bzw. Segments umfassen. Dadurch wird die Auswertung vereinheitlicht.

Ebenso ist es möglich, dass die Auswertungseinrichtung zwischen der Durchführung der Frequenzanalyse und der Ermittlung des jeweiligen Fehlerwertes eine Plausibilitätsprüfung der Fehlerwerte vornimmt. Sofern die Streifen nur eine relativ geringe Breite aufweisen, können beispielsweise die Fehlerwerte benachbarter Streifen miteinander verglichen werden. Weicht der für einen bestimmten Streifen ermittelte Fehlerwert deutlich von den ermittelten Fehlerwerten der benachbarten Streifen ab, so kann dies auf eine fehlerhafte Auswertung hindeuten. Ebenso kann es auf eine fehlerhafte Auswertung hindeuten, wenn mittels der Frequenzanalyse ermittelte Ortsfrequenzen für benachbarte Streifen deutlich voneinander abweichen. Ursache für derartige Abweichungen können beispielsweise Zunderflecken sein. Auch sollten über mehrere Streifen hinweg gesehen die Fehlerwerte eine Werteverteilung aufweisen, die einer Glockenkurve ähnelt, insbesondere einer Gaußverteilung.

Vorzugsweise ermittelt die Auswertungseinrichtung den jeweiligen Fehlerwert unter Verwertung zumindest der Intensität und/oder der Ortsfrequenz der stärksten örtlichen Schwingung. Im einfachsten Fall kann beispielsweise ausschließlich die Intensität der stärksten örtlichen Schwingung verwertet werden. Alternativ ist es möglich, dass ausschließlich die Ortsfrequenz der stärksten örtlichen Schwingung verwertet wird. Vorzugsweise wird der jeweilige Fehlerwert jedoch anhand der Intensität und der Ortsfrequenz der stärksten örtlichen Schwingung in kombinierter Verwertung ermittelt. In jedem Fall ist es möglich, in der Auswertungseinrichtung entsprechende Kennlinien zu hinterlegen.

Das flache Walzgut kann in dem Walzgerüst nach Bedarf warmgewalzt oder kaltgewalzt werden.

In aller Regel befindet sich zwischen dem Walzgerüst der Walzanordnung und der Erfassungseinrichtung kein anderes Walzgerüst. Dies gilt unabhängig davon, ob das Walzgerüst der Walzanordnung das einzige Walzgerüst eines Walzwerks, das letzte Walzgerüst einer mehrgerüstigen Walzstraße oder ein anderes als das letzte Walzgerüst einer mehrgerüstigen Walzstraße ist.

Die Aufgabe wird weiterhin durch ein Computerprogramm mit den Merkmalen des Anspruchs 13 gelöst. Erfindungsgemäß bewirkt die Abarbeitung des Computerprogramms, dass die Auswertungseinrichtung mit einer Erfassungseinrichtung, einer Steuereinrichtung und einem Walzgerüst der Walzanordnung gemäß einem erfindungsgemäßen Betriebsverfahren zusammenwirkt.

Die Aufgabe wird weiterhin durch eine Auswertungseinrichtung mit den Merkmalen des Anspruchs 14 gelöst. Erfindungsgemäß ist die Auswertungseinrichtung mit einem erfindungsgemäßen Computerprogramm programmiert, so dass die Auswertungseinrichtung mit einer Erfassungseinrichtung, einer Steuereinrichtung und einem Walzgerüst der Walzanordnung gemäß einem erfindungsgemäßen Betriebsverfahren zusammenwirkt.

Die Aufgabe wird weiterhin durch eine Walzanordnung mit den Merkmalen des Anspruchs 15 gelöst. Erfindungsgemäß ist die Auswertungseinrichtung der Walzanordnung als erfindungsgemäße Auswertungseinrichtung ausgebildet.

### Kurze Beschreibung der Zeichnungen

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine Walzanordnung von der Seite,
- FIG 2: die Walzanordnung von FIG 1 von oben,
- FIG 3: einen zweidimensionalen Datensatz,
- FIG 4: ein Ablaufdiagramm,
- FIG 5: einen zweidimensionalen Datensatz,
- FIG 6: ein Ablaufdiagramm,
- FIG 7: ein Segment,
- FIG 8: ein Ablaufdiagramm,
- FIG 9: einen Verlauf von Datenwerten,
- FIG 10: ein Ortsspektrum,
- FIG 11: ein Walzgut mit Unplanheiten,
- FIG 12: einen einzelnen Schritt eines Ablaufdiagramm,
- FIG 13: eine mehrgerüstige Walzstraße und
- FIG 14: eine mehrgerüstige Walzstraße.

### Beschreibung der Ausführungsformen

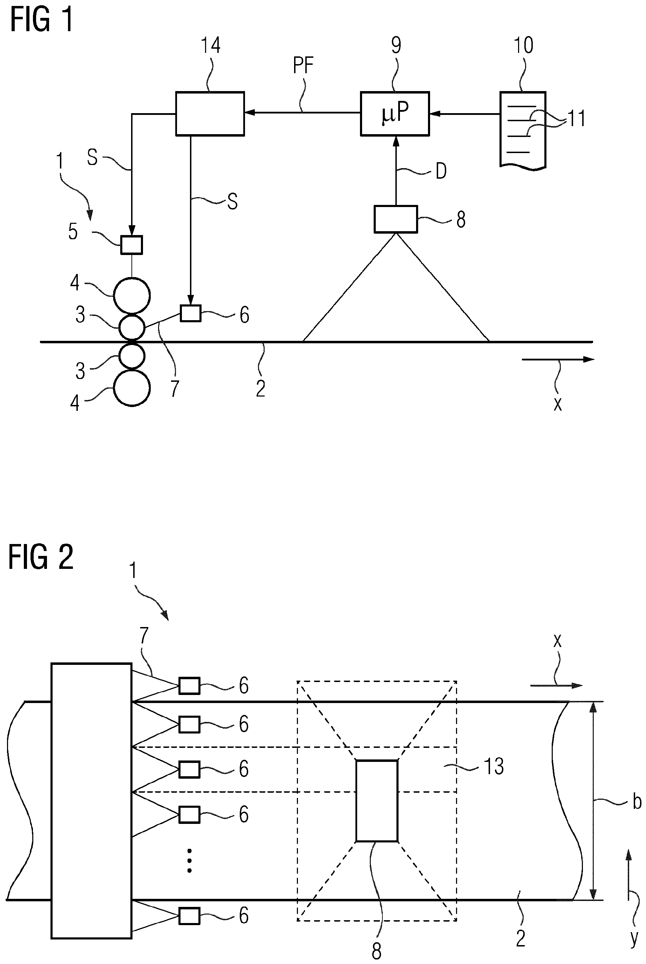

Gemäß den FIG 1 und 2 weist eine Walzanordnung ein Walzgerüst 1 auf. Mittels des Walzgerüsts 1 wird ein Walzgut 2 gewalzt. Nach dem Walzen in dem Walzgerüst 1 läuft das Walzgut 2 in einer Transportrichtung x aus dem Walzgerüst 1 aus.

Das Walzgut 2 besteht aus Metall, oftmals aus Stahl. Alternativ kann das Walzgut 2 beispielsweise aus Aluminium oder Kupfer bestehen. Es ist möglich, dass das Walzgut 2 in dem Walzgerüst 1 kaltgewalzt wird. In der Regel erfolgt jedoch ein Warmwalzen.

Das Walzgut 2 ist entsprechend der Darstellung in FIG 2 ein flaches Walzgut, also ein Band oder ein Grobblech. Dies ergibt sich implizit auch aus der Darstellung des Walzgerüsts 1 in FIG 1 als Walzgerüst, das zusätzlich zu seinen Arbeitswalzen 3 weitere Walzen 4 aufweist, insbesondere Stützwalzen. Das Walzgut 2 erstreckt sich in einer Breitenrichtung y über eine Walzgutbreite b.

Das Walzgerüst 1 umfasst Planheitsstellglieder 5 und/oder 6. Sowohl mittels der Planheitsstellglieder 5 als auch mittels der Planheitsstellglieder 6 kann die Planheit des aus dem Walzgerüst 1 auslaufenden Walzguts 2 eingestellt werden. Die Planheitsstellglieder 5 sind global wirkende Stellglieder, also Stellglieder, deren Ansteuerung die Planheit des Walzguts 2 zwangsweise über die gesamte Walzgutbreite b beeinflusst. Beispiele derartiger Stellglieder sind eine Biegeeinrichtung zum Biegen der Arbeitswalzen 3, eine Schiebeeinrichtung zum axialen Verschieben der Arbeitswalzen 3 und/oder der weiteren Walzen 4 und andere Stellglieder, beispielsweise Stellglieder für ein sogenanntes pair crossing. Die Planheitsstellglieder 6 können alternativ oder zusätzlich zu den Planheitsstellgliedern 5 vorhanden sein. Die Planheitsstellglieder 6 sind nur lokal wirkende Stellglieder. Mittels derartiger, nur lokal wirkender Stellglieder kann individuell jeweils ein einzelner Abschnitt der oberen Arbeitswalze 3 und/oder der unteren Arbeitswalze 3 beeinflusst werden. Dargestellt ist dies in FIG 2 für die obere Arbeitswalze 3. Bei derartigen nur lokal wirkenden Stellgliedern kann es sich insbesondere um Kühleinrichtungen handeln, mittels derer nur auf den jeweiligen Abschnitt der entsprechenden Arbeitswalze 3 ein Kühlmittel 7 aufgebracht werden kann.

Die Walzanordnung weist weiterhin eine Erfassungseinrichtung 8 auf. Die Erfassungseinrichtung 8 ist entsprechend der Darstellung in FIG 2 in einer durch die Breitenrichtung y und die Transportrichtung x definierten Ebene gesehen vorzugsweise mittig über dem Walzgut 2 angeordnet. In aller Regel befindet sich zwischen dem Walzgerüst 1 und der Erfassungseinrichtung 8 kein anderes Walzgerüst.

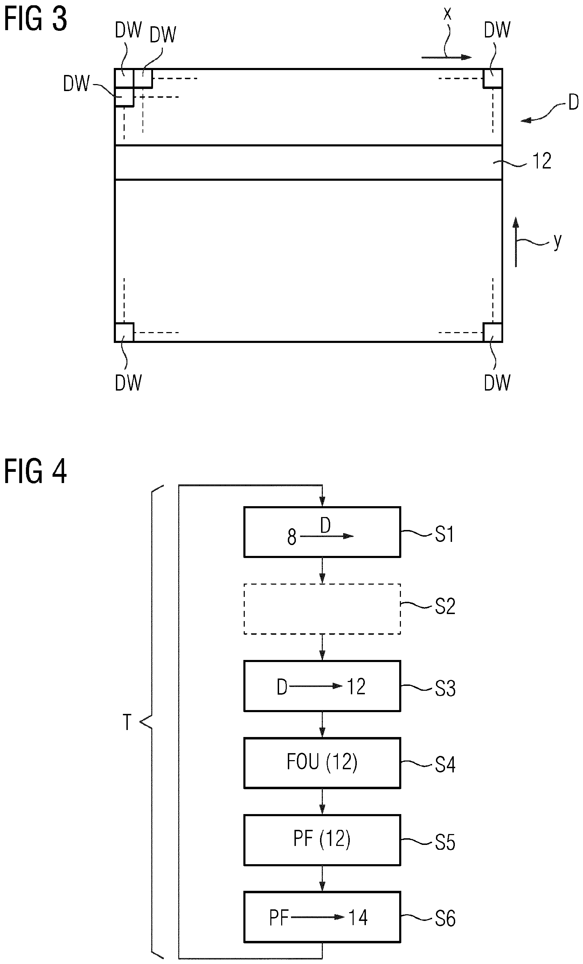

Mittels der Erfassungseinrichtung 8 wird iterativ immer wieder - meist mit einer festen Zykluszeit T (siehe FIG 4) - mindestens ein zweidimensionaler Datensatz D der Oberfläche des Walzguts 2 erfasst. Die Zykluszeit T kann mit einer Bildrate von etlichen Bildern/s korrespondieren, beispielsweise mit 24 Bildern/s, 30 Bildern/s oder 60 Bildern/s. Auch andere Werte sind möglich. Aufgrund der Anordnung der Erfassungseinrichtung 8 auslaufseitig des Walzgerüsts 1 ist auch der Datensatz D auf das Walzgut 2 auslaufseitig des Walzgerüsts 1 bezogen.

Die Erfassungseinrichtung 8 arbeitet kontaktlos und ohne mechanische Einwirkung auf das Walzgut 2. Beispielsweise kann die Erfassungseinrichtung 8 als Kameraeinrichtung ausgebildet sein, mittels derer als jeweiliger zweidimensionaler Datensatz D ein jeweiliges zweidimensionales Bild der Oberfläche des Walzguts 2 erfasst wird. Im Falle mehrerer Kameras kann die Erfassungseinrichtung 8 entweder die von den Kameras gelieferten zweidimensionalen Datensätze D als solche verwerten oder aufgrund von erfassten Bilddaten der mehreren Kameras als resultierenden zweidimensionalen Datensatz D ein resultierendes zweidimensionales Bild der Oberfläche des Walzguts 2 ermitteln. Auf die entsprechenden Ausführungen in der Beschreibungseinleitung wird verwiesen. Soweit erforderlich, kann weiterhin der Kameraeinrichtung eine - gegebenenfalls moduliert arbeitende - Beleuchtungseinrichtung zugeordnet sein.

Die Datensätze D können einzeln oder kontinuierlich anfallen. Im Falle der Ausgestaltung der Erfassungseinrichtung 8 als Kameraeinrichtung können die übermittelten Datensätze D bzw. Bilder beispielsweise einzelne Bilder im JPEG-Format oder einem anderen geeigneten Format sein oder kontinuierlich anfallende Videobilder beispielsweise im MPEG-Format oder im mp4-Format.

Der Datensatz D umfasst gemäß FIG 3 eine Vielzahl von Datenwerten DW. In FIG 3 sind nur einige der Datenwerte DW dargestellt, um FIG 3 nicht unnötig zu überfrachten. Unabhängig von der konkreten Ausgestaltung der Erfassungseinrichtung 8 korrespondieren entsprechend der Darstellung in FIG 3 die einzelnen Datenwerte DW jedoch - je nachdem, auf welchen Ort innerhalb des zweidimensionalen Datensatzes D sie bezogen sind - mit einem entsprechenden Ort des Walzguts 2. Es handelt sich also um eine Abbildung der Oberfläche des Walzguts 2 auf die Orte des Datensatzes D. Der jeweilige Datenwerte DW als solcher kann insbesondere von der lokal am jeweils korrespondierenden Ort des Walzguts 2 herrschenden äußeren Planheit des Walzguts 2 abhängig sein. Alternativ oder zusätzlich kann der jeweilige Datenwert DW als solcher von der lokal am jeweils korrespondierenden Ort des Walzguts 2 herrschenden inneren Spannung des Walzguts 2 abhängig sein.

Die Walzanordnung weist weiterhin eine Auswertungseinrichtung 9 auf. Die Auswertungseinrichtung 9 ist mit der Erfassungseinrichtung 8 datentechnisch verbunden. Aufgrund der datentechnischen Verbindung kann die Auswertungseinrichtung 9 die Datensätze D von der Erfassungseinrichtung 8 entgegennehmen. Der Aufbau und die Wirkungsweise der Auswertungseinrichtung 9 sind der Kerngegenstand der vorliegenden Erfindung.

Die Auswertungseinrichtung 9 ist in aller Regel als softwareprogrammierbare Einrichtung ausgebildet. Dies ist in FIG 1 durch die Angabe "µP" innerhalb der Auswertungseinrichtung 9 angedeutet. Die Auswertungseinrichtung 9 ist mit einem Computerprogramm 10 programmiert. Das Computerprogramm 10 umfasst Maschinencode 11, der von der Auswertungseinrichtung 9 unmittelbar abarbeitbar ist. Aufgrund der Programmierung mit dem Computerprogramm 10 bzw. aufgrund der Abarbeitung des Maschinencodes 11 führt die Auswertungseinrichtung 9 die nachstehend in Verbindung mit FIG 4 erläuterte Abfolge von Schritten aus.

In einem Schritt S1 nimmt die Auswertungseinrichtung 9 von der Erfassungseinrichtung 8 den jeweiligen Datensatz D (oder gegebenenfalls auch mehrere Datensätze D) entgegen.

In einem Schritt S2 nimmt die Auswertungseinrichtung 9 eine Vorverarbeitung des Datensatzes D vor. Der Schritt S2 ist nur optional. Er kann also auch entfallen. Aus diesem Grund ist der Schritt S2 in FIG 3 nur gestrichelt dargestellt.

In einem Schritt S3 unterteilt die Auswertungseinrichtung 9 den Datensatz D in Streifen 12 (siehe FIG 3, in der einer der Streifen 12 dargestellt ist). Die Streifen 12 (bzw. die mit den Streifen 12 korrespondierenden Bereiche des Walzguts 2) verlaufen ersichtlich in der Transportrichtung x. Die Streifen 12 können untereinander die gleiche Breite aufweisen. Dies ist meist auch der Fall. Es ist aber nicht zwingend erforderlich.

In einem Schritt S4 führt die Auswertungseinrichtung 9 - individuell für den jeweiligen Streifen 12 - eine örtliche Frequenzanalyse des entsprechenden Streifens 12 durch. Beispielsweise kann die Auswertungseinrichtung 9 im Schritt S4 eine Fouriertransformation vornehmen, angedeutet in FIG 4 durch "FOU". In jedem Fall ermittelt die Auswertungseinrichtung 9 jedoch durch die Frequenzanalyse die Intensitäten von örtlichen Schwingungen und deren jeweilige Ortsfrequenz, im Ergebnis also das Ortsspektrum.

Aufbauend auf der örtlichen Frequenzanalyse und damit anhand der örtlichen Frequenzanalyse ermittelt die Auswertungseinrichtung 9 in einem Schritt S5 - wieder individuell für den jeweiligen Streifen 12 - einen jeweiligen Fehlerwert PF. Die Auswertungseinrichtung 9 wertet also das für den jeweiligen Streifen 12 ermittelte Ortsspektrum aus.

Aufgrund der Abbildungsvorschrift beim Erfassen des Datensatzes D korrespondieren die Streifen 12 des Datensatzes D mit entsprechenden Streifen 13 des Walzguts 2. Einer der Streifen 13 ist in FIG 2 dargestellt. Aufgrund der gegebenen Korrespondenz zwischen den Streifen 12 und den Streifen 13 können die Fehlerwerte PF somit direkt auch den entsprechenden Streifen 13 des Walzguts 2 zugeordnet werden.

Wie bereits erwähnt, ist es möglich, dass die Planheitsstellglieder 5, 6 global wirkende Stellglieder und/oder nur lokal wirkende Stellglieder 6 umfassen. Sofern die Planheitsstellglieder 5, 6 ausschließlich global wirkende Stellglieder sind, kann die Anzahl an Streifen 12 nach Bedarf bestimmt sein. Sofern die Planheitsstellglieder 5, 6 ausschließlich oder unter anderem auch nur lokal wirkende Stellglieder 6 umfassen, die nur auf einen jeweiligen Abschnitt einer Arbeitswalze 3 wirken, ist dies prinzipiell ebenfalls möglich. In diesem Fall sind die Streifen 12 jedoch vorzugsweise derart bestimmt, dass die korrespondierenden Streifen 13 des Walzguts 2 entsprechend der Darstellung in FIG 2 jeweils mit einem derartigen Abschnitt der oberen Arbeitswalze 3 und/oder der unteren Arbeitswalze 3 korrespondieren. Der Begriff "korrespondieren" ist in diesem Zusammenhang nicht zwangsweise im Sinne einer 1:1-Korrespondenz zu verstehen. Der Begriff ist vielmehr derart gemeint, dass ein einzelner Streifen 12/13 genau einem Abschnitt zugeordnet werden kann, der entsprechende einzelne Streifen 12/13 also nicht gleichzeitig Bestandteil mehrerer Abschnitte ist. Umgekehrt können in einen einzelnen Abschnitt aber durchaus mehrere Streifen 12/13 fallen.

Der Planheitsfehler des Walzguts 2 ist definiert als 5L/L, wobei L die minimale Länge des jeweils korrespondierenden Streifens 13 des Walzguts 2 im spannungsfreien Zustand ist und δL der Unterschied ist, um den der jeweilige Streifen 13 des Walzguts 2 länger als die minimale Länge ist. Der Fehlerwert PF ist in der Regel mit dem Planheitsfehler zwar nicht identisch, wohl aber von ihm abhängig.

In einem Schritt S6 führt die Auswertungseinrichtung 9 die ermittelten Fehlerwerte PF daher einer Steuereinrichtung 14 zu. Die Auswertungseinrichtung 9 ist zu diesem Zweck - siehe auch FIG 1 - mit der Steuereinrichtung 14 datentechnisch verbunden.

Die Steuereinrichtung 14 ist ebenfalls Bestandteil der Walzanordnung. Die Steuereinrichtung 14 berücksichtigt die an sie übermittelten Fehlerwerte PF bei der Ermittlung von Stellgrößen S für die Planheitsstellglieder 5, 6 des Walzgerüsts 1. Die Berücksichtigung erfolgt derart, dass die Fehlerwerte PF so weit wie möglich korrigiert werden, die resultierende Planheit des Walzguts 2 also so weit wie möglich an eine Sollplanheit angenähert wird. Die Stellgrößen S gibt die Steuereinrichtung 14 an die Planheitsstellglieder 5, 6 aus.

Vom Schritt S6 aus geht die Auswertungseinrichtung 9 wieder zum Schritt S1 zurück. Die Auswertungseinrichtung 9 für die Schritte S1 bis S6 also iterativ immer wieder aus. In aller Regel erfolgt die Ausführung mit der festen Zykluszeit T. Diese Zykluszeit T sollte vorzugsweise maximal so groß wie der Regeltakt der Steuereinrichtung 14 sein.

Im Ergebnis ergibt sich somit durch das Zusammenwirken von Erfassungseinrichtung 8, Auswertungseinrichtung 9, Steuereinrichtung 14 und Walzgerüst 1 (bzw. dessen Planheitsstellgliedern 5, 6) ein in Echtzeit arbeitender geschlossener Regelkreis, mittels dessen die Fehlerwerte PF so weit wie möglich korrigiert und beseitigt werden.

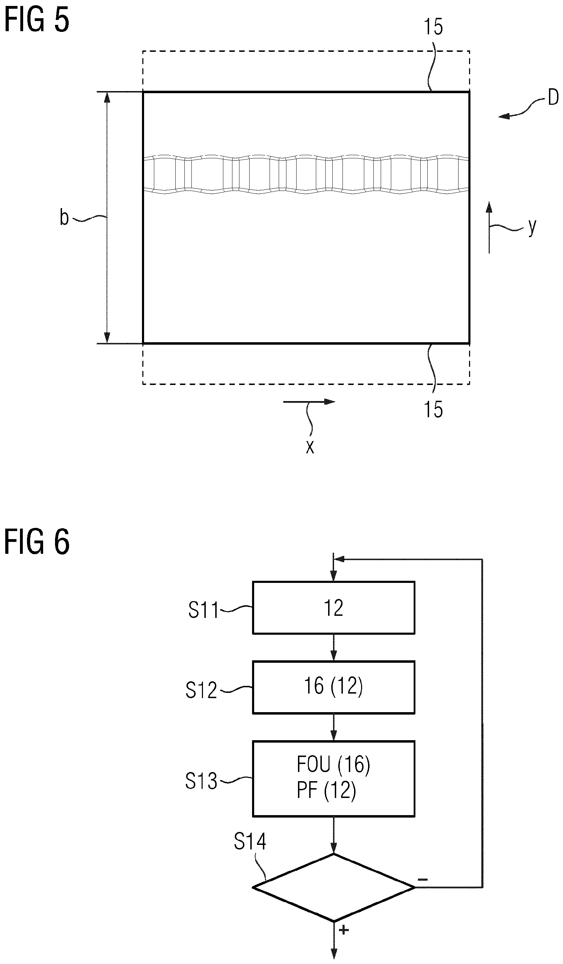

Der Erfassungsbereichs der Erfassungseinrichtung 8 ist vorzugsweise derart bestimmt, dass entsprechend der Darstellung in FIG 5 mittels der zweidimensionalen Datensätze D die Oberfläche des Walzguts 2 über die gesamte Breite b des Walzguts 2 erfasst wird. Somit umfasst der jeweilige zweidimensionale Datensatz D auch die Seitenkanten 15 des Walzguts 2 (bzw. deren Abbild).

Nachfolgend wird in Verbindung mit FIG 6 eine mögliche Vorgehensweise erläutert, mittels derer die Frequenzanalyse und die darauf aufbauende Ermittlung des Fehlerwertes PF vorgenommen werden können. FIG 6 zeigt also eine mögliche Implementierung der Schritte S4 und S5 von FIG 4.

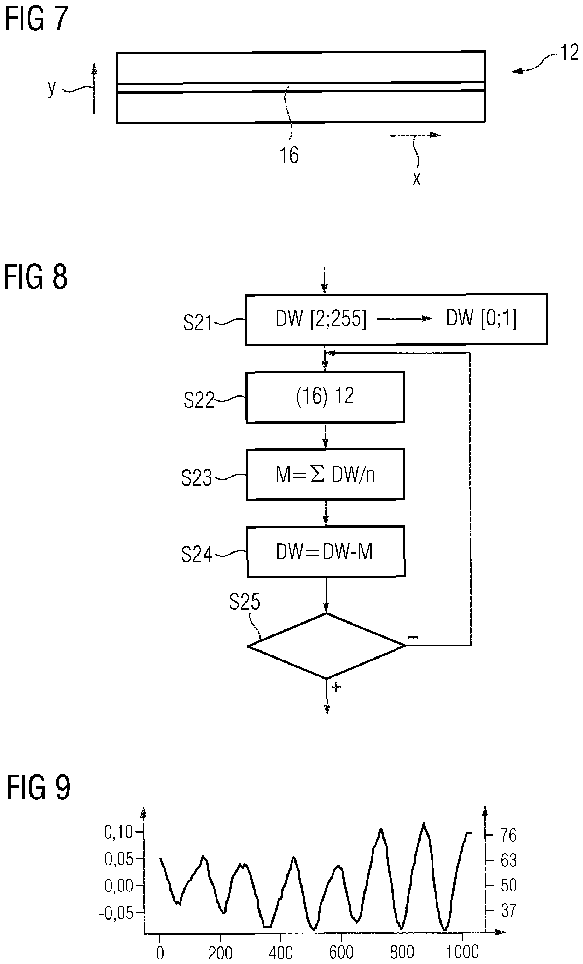

Gemäß FIG 6 selektiert die Auswertungseinrichtung 9 in einem Schritt S11 einen der Streifen 12. In einem Schritt S12 selektiert die Auswertungseinrichtung 9 ein Segment 16 des im Schritt S11 selektierten Streifens 12. Das Segment 16 erstreckt sich gemäß FIG 7 in Transportrichtung x gesehen über die gesamte Länge des im Schritt S11 selektierten Streifens 12. In Breitenrichtung y gesehen erstreckt sich das Segment 16 hingegen nur über einen Teil der Breite des im Schritt S11 selektierten Streifens 12. Im Schritt S13 führt die Auswertungseinrichtung 9 mit den Datenwerten DW nur dieses Segment 16 die Frequenzanalyse (vergleiche den Schritt S4) durch und ermittelt hierauf aufbauend (vergleiche den Schritt S5) den Fehlerwert PF für den im Schritt S11 selektierten Streifen 12.

In der Regel gilt, dass die Vorgehensweise von FIG 6 zu umso besseren Ergebnissen führt, je schmaler das im Schritt S12 selektierte Segment 16 in Breitenrichtung y ist. Im Extremfall ist es möglich, dass sich das Segment 16 in Breitenrichtung y nur über eine einzelne Zelle des zweidimensionalen Datensatzes D erstreckt.

In einem Schritt S14 prüft die Auswertungseinrichtung 9, ob sie die Schritte S11 bis S13 bereits für alle Streifen 12 durchgeführt hat. Wenn dies nicht der Fall ist, geht die Auswertungseinrichtung 9 zum Schritt S11 zurück. In diesem Fall selektiert sie bei der erneuten Ausführung des Schrittes S11 einen anderen Streifen 12, für den sie die Schritte S11 bis S13 noch nicht ausgeführt hat. Anderenfalls ist die Vorgehensweise von FIG 6 abgeschlossen.

Es ist im Rahmen der Ausgestaltung der FIG 6 und 7 sogar möglich, dass die Auswertungseinrichtung 9 für einen einzelnen Streifen 12 mehrere Segmente 16 selektiert. In diesem Fall wertet die Auswertungseinrichtung 9 die Segmente 16 einzeln aus und bestimmt sodann anhand der Ergebnisse der Auswertung der einzelnen Segmente 16 den Fehlerwert PF für den entsprechenden Streifen 12. Beispielsweise kann die Auswertungseinrichtung 9 für die Segmente 16 jeweils einen vorläufigen Fehlerwert ermitteln und dann den resultierenden Fehlerwert PF anhand der vorläufigen Fehlerwerte bestimmen. Insbesondere kann die Auswertungseinrichtung 9 als resultierenden Fehlerwert PF den maximalen vorläufigen Fehlerwert oder einen gewichteten oder ungewichteten Mittelwert der ermittelten vorläufigen Fehlerwerte heranziehen.

Die im Schritt S2 erwähnte Vorverarbeitung kann nach Bedarf sein. Mögliche Vorgehensweisen wurden bereits erläutert. Nachstehend wird in Verbindung mit FIG 8 eine weitere mögliche Vorverarbeitung näher erläutert. Diese Vorverarbeitung kann je nach Bedarf alternativ oder zusätzlich zu den anderen Möglichkeiten der Vorverarbeitung ausgeführt werden.

Im Rahmen von FIG 8 wird angenommen, dass der jeweilige Datensatz D ein "normales" Intensitätsbild (Graustufenbild) des Walzguts 2 ist. Die Datenwerte DW sind also Intensitätswerte. In diesem Fall kann entsprechend der Darstellung in FIG 8 beispielsweise zunächst in einem Schritt S21 eine Normierung der Intensitätswerte bezüglich des maximal möglichen Wertebereichs der Werte des zweidimensionalen Datensatzes D vorgenommen werden, also eine - meist lineare - Abbildung in den Wertebereich zwischen 0 und 1. Wenn - rein beispielhaft - die Datenwerte DW Grauwerte mit einer Datentiefe von 8 Bit sind, die Datenwerte DW also zwischen 0 (= schwarz) und 255 (= weiß) liegen können, so wird einem Datenwert DW von 0 unverändert der Wert 0 zugeordnet, jedoch einem Datenwert DW von 1 der Wert 1/255, einem Datenwert DW von 2 der Wert 2/255 usw. Der Schritt S21 kann übergreifend über alle Streifen 12 gleichzeitig ausgeführt werden, da er unabhängig von der Positionierung eines Datenwert DW innerhalb des Datensatzes D ist. Die neu ermittelten Datenwerte DW, also die Werte im Bereich zwischen 0 und 1, treten nachfolgend an die Stelle der ursprünglichen Datenwerte DW, also beispielsweise der Werte zwischen 0 und 255.

In einem Schritt S22 selektiert die Auswertungseinrichtung 9 einen Bereich des Datensatzes D. Dieser Bereich kann ein Streifen 12 oder im Falle der (bevorzugten) Ausgestaltung gemäß den FIG 6 und 7 innerhalb eines Streifens 12 das jeweilige Segment 16 sein. In einem Schritt S23 ermittelt die Auswertungseinrichtung 9 für den im Schritt S22 selektierten Bereich den Mittelwert M der Datenwerte DW. Die Auswertungseinrichtung 9 bildet also die Summe der Datenwerte DW und dividiert diese Summe durch die Anzahl an Datenwerten DW, die in die Summe eingehen. In einem Schritt S24 subtrahiert die Auswertungseinrichtung 9 den Mittelwert M von den Datenwerten DW des im Schritt S22 selektierten Bereichs.

In einem Schritt S25 prüft die Auswertungseinrichtung 9, ob sie die Schritte S22 bis S24 bereits für alle Streifen 12 durchgeführt hat. Wenn dies nicht der Fall ist, geht die Auswertungseinrichtung 9 zum Schritt S22 zurück. In diesem Fall selektiert sie bei der erneuten Ausführung des Schrittes S22 einen anderen Bereich, für den sie die Schritte S22 bis S24 noch nicht ausgeführt hat. Anderenfalls ist die Vorgehensweise von FIG 8 abgeschlossen.

Die wiederholte Ausführung der Schritte S22 bis S25 bewirkt somit, bezogen auf einen Streifen 12 oder das Segment 16 eines Streifens 12, eine Bereinigung um den Mittelwert M der Datenwerte DW des jeweiligen Streifens 12 bzw. Segments 16.

Die Vorgehensweise von FIG 8 ist auch aus der Darstellung in FIG 9 ersichtlich. FIG 9 zeigt - rein beispielhaft - einen Verlauf der Datenwerte DW in Transportrichtung x eines Segments 16 mit minimaler Breite in Breitenrichtung y. Links ist in FIG 9 die Skalierung der Datenwerte DW nach Ausführung der Schritte S21 bis S25 angegeben, rechts die Skalierung der Datenwerte DW vor Ausführung der Schritte S21 bis S25. Die Zahlen auf der Abszisse können beispielsweise Zellennummern in Transportrichtung x sein.

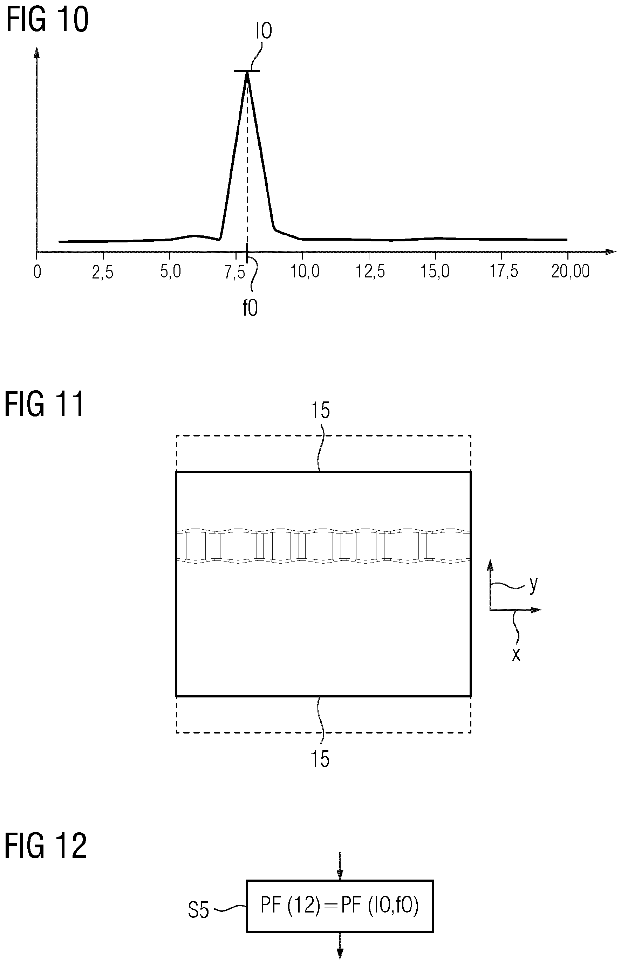

FIG 10 zeigt rein beispielhaft ein typisches Spektrum im Ortsbereich, wie es beispielsweise für einen einzelnen Streifen 12 durch Ausführung der Schritte S4 und S5 erhalten wurde. Auf der Abszisse können beispielsweise die Anzahl an Schwingungen pro Meter aufgetragen sein, auf der Ordinate die zugehörige Intensität der Frequenz in willkürlichen Einheiten. Entsprechend der Darstellung in FIG 10 weist das Spektrum einen (1) signifikanten Peak auf, also eine höchste Intensität I0. Dies ist insbesondere deshalb der Fall, weil die zugehörigen Wellen im Walzgut 2 - siehe FIG 11 - im Falle einer auftretenden Unplanheit oftmals sehr regelmäßig sind.

Die höchste Intensität I0 tritt bei einer zugehörigen Ortsfrequenz f0 auf. Vorzugsweise ermittelt die Auswertungseinrichtung 9 entsprechend der Darstellung in FIG 12 den Fehlerwert PF für den entsprechenden Streifen 12 unter Verwertung der höchsten Intensität I0 und/oder der zugehörigen Ortsfrequenz f0. Es ist möglich, dass in die Ermittlung des Fehlerwertes PF ausschließlich die höchste Intensität I0 und/oder die zugehörige Ortsfrequenz f0 eingehen. Im einfachsten Fall kann beispielsweise ausschließlich die höchste Intensität I0 verwertet werden. Alternativ kann auch ausschließlich die Ortsfrequenz f0 der stärksten örtlichen Schwingung verwertet werden. Vorzugsweise wird der jeweilige Fehlerwert PF jedoch anhand der höchsten Intensität I0 und der zugehörigen Ortsfrequenz f0 in kombinierter Verwertung ermittelt. Alternativ ist es möglich, dass in die Ermittlung des Fehlerwertes PF zusätzlich auch andere Intensitäten und/oder die jeweils zugehörigen Ortsfrequenzen eingehen. In jedem Fall ist es möglich, in der Auswertungseinrichtung 9 entsprechende (eindimensionale) Kennlinien oder (mehrdimensionale) Kennlinienfelder zu hinterlegen.

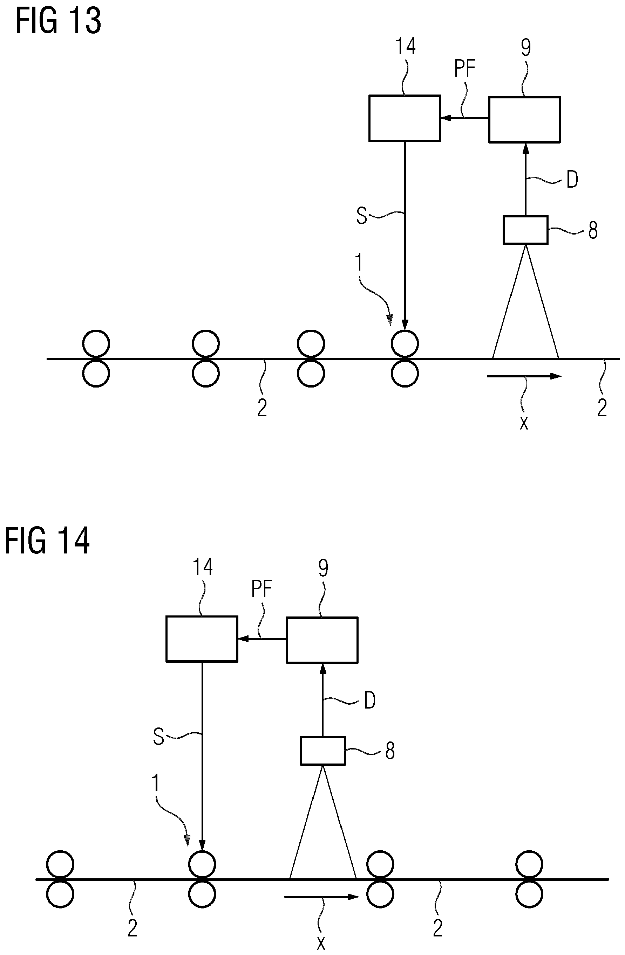

Es ist möglich, dass das Walzgerüst 1 der erfindungsgemäßen Walzanordnung das einzige Walzgerüst eines Walzwerks ist. Alternativ kann das Walzgerüst 1 der erfindungsgemäßen Walzanordnung Bestandteil einer mehrgerüstigen Walzstraße sein. In diesem Fall kann das Walzgerüst 1 der erfindungsgemäßen Walzanordnung entweder entsprechend der (vereinfachten) Darstellung in FIG 13 das letzte Walzgerüst der mehrgerüstigen Walzstraße oder entsprechend der (ebenfalls vereinfachten) Darstellung in FIG 14 ein anderes als das letzte Walzgerüst der mehrgerüstigen Walzstraße sein. Auch in diesen beiden Fällen befindet sich jedoch zwischen dem Walzgerüst 1 der erfindungsgemäßen Walzanordnung und der Erfassungseinrichtung 8 kein anderes Walzgerüst.

Die vorliegende Erfindung weist viele Vorteile auf. Insbesondere ist die Erfassungseinrichtung 8 einfach, robust und kostengünstig. Es ist ein kompakter und platzsparender Einbau möglich. Es ist weiterhin möglich, die Erfassungseinrichtung mit einem hinreichend großen Abstand vom Walzgut 2 anzuordnen, so dass die Belastung der Erfassungseinrichtung 8 mit Staub, Wasser, Hitze usw. relativ gering ist. Der Aufbau ist modular. Einzelne Komponenten, insbesondere die Erfassungseinrichtung 8, die Auswertungseinrichtung 9 und die Steuereinrichtung 14, können daher modifiziert und ausgetauscht werden. Es müssen lediglich die Schnittstellen der ausgetauschten Komponenten kompatibel sein.

Obwohl die Erfindung im Detail durch das bevorzugte Ausführungsbeispiel näher illustriert und beschrieben wurde, so ist die Erfindung nicht durch die offenbarten Beispiele eingeschränkt und andere Varianten können vom Fachmann hieraus abgeleitet werden, ohne den Schutzumfang der Erfindung zu verlassen.

### Bezugszeichenliste

- 1: Walzgerüst
- 2: Walzgut
- 3: Arbeitswalzen
- 4: weitere Walzen
- 5: Planheitsstellglieder
- 6: Stellglieder
- 7: Kühlmittel
- 8: Erfassungseinrichtung
- 9: Auswertungseinrichtung
- 10: Computerprogramm
- 11: Maschinencode
- 12: Streifen
- 13: Streifen
- 14: Steuereinrichtung
- 15: Seitenkanten
- 16: Segment

- b: Walzgutbreite
- D: Datensatz
- DW: Datenwerte
- f0: Ortsfrequenz der höchsten Intensität
- I0: höchste Intensität
- M: Mittelwert
- PF: Fehlerwert
- S: Stellgrößen
- S1 bis S25: Schritte
- T: Zykluszeit
- x: Transportrichtung
- y: Breitenrichtung

## Patentansprüche

1. Betriebsverfahren für eine Walzanordnung,
- wobei mittels eines Walzgerüsts (1) der Walzanordnung ein sich in einer Breitenrichtung (y) über eine Walzgutbreite (b) erstreckendes flaches Walzgut (2) aus Metall gewalzt wird, wobei das flache Walzgut (2) nach dem Walzen in einer Transportrichtung (x) aus dem Walzgerüst (1) ausläuft,
- wobei mittels einer kontaktlos und ohne mechanische Einwirkung auf das flache Walzgut (2) arbeitenden Erfassungseinrichtung (8) auslaufseitig des Walzgerüsts (1) iterativ immer wieder mindestens ein zweidimensionaler Datensatz (D) der Oberfläche des flachen Walzguts (2) erfasst wird, dessen Werte (DW) von der lokal am jeweils korrespondierenden Ort des flachen Walzguts (2) herrschenden äußeren Planheit und/oder von der lokal am jeweils korrespondierenden Ort des flachen Walzguts (2) herrschenden inneren Spannung abhängig sind,
- wobei der jeweilige zweidimensionale Datensatz (D) von einer Auswertungseinrichtung (9) der Walzanordnung entgegengenommen wird, die für in Transportrichtung (x) verlaufende Streifen (13) des flachen Walzguts (2) unter Verwertung von mit den Streifen (13) korrespondierenden Streifen (12) des jeweiligen zweidimensionalen Datensatzes (D) jeweils einen auf den jeweiligen Streifen (13, 12) bezogenen vom Planheitsfehler abhängigen Fehlerwert (PF) ermittelt,
- wobei die Auswertungseinrichtung (9) die ermittelten Fehlerwerte (PF) einer Steuereinrichtung (14) der Walzanordnung zuführt, die ihrerseits die ermittelten Fehlerwerte (PF) bei der Ermittlung von Stellgrößen (S) für Planheitsstellglieder (5, 6) des Walzgerüsts (1) berücksichtigt,
- so dass sich durch das Zusammenwirken von Erfassungseinrichtung (8), Auswertungseinrichtung (9), Steuereinrichtung (14) und Walzgerüst (1) ein in Echtzeit arbeitender geschlossener Regelkreis ergibt,
**dadurch gekennzeichnet,**
**dass** die Auswertungseinrichtung (9) zur Ermittlung des jeweiligen Fehlerwertes (PF) eines Streifens (13) eine örtliche Frequenzanalyse des mit dem jeweiligen Streifen (13) korrespondierenden Streifens (12) des jeweiligen zweidimensionalen Datensatzes (D) durchführt und den jeweiligen Fehlerwert (PF) anhand der örtlichen Frequenzanalyse ermittelt.

2. Betriebsverfahren nach Anspruch 1,
**dadurch gekennzeichnet,**
**dass** die Erfassungseinrichtung (8) als Kameraeinrichtung ausgebildet ist, mittels derer als jeweiliger zweidimensionaler Datensatz (D) ein jeweiliges zweidimensionales Bild der Oberfläche des flachen Walzguts (2) erfasst oder aufgrund von erfassten Bilddaten ermittelt wird.

3. Betriebsverfahren nach Anspruch 1 oder 2,
**dadurch gekennzeichnet,**
**dass** mittels der zweidimensionalen Datensätze (D) die Oberfläche des flachen Walzguts (2) über die gesamte Breite (b) des flachen Walzguts (2) erfasst wird.

4. Betriebsverfahren nach Anspruch 1, 2 oder 3,
**dadurch gekennzeichnet,**
**dass** die Erfassungseinrichtung (8) in einer durch die Breitenrichtung (y) und die Transportrichtung (x) definierten Ebene gesehen mittig über dem flachen Walzgut (2) angeordnet ist.

5. Betriebsverfahren nach einem der obigen Ansprüche,
**dadurch gekennzeichnet,**
**dass** die Planheitsstellglieder (5, 6) des Walzgerüsts lokal wirkende Stellglieder (6) umfassen, mittels derer jeweils nur ein Abschnitt der oberen Arbeitswalze (3) und/oder der unteren Arbeitswalze (3) beeinflusst wird, und dass die Streifen (13) des flachen Walzgutes (2) jeweils mit einem Abschnitt der oberen Arbeitswalze (3) und/oder der unteren Arbeitswalze (3) korrespondieren.

6. Betriebsverfahren nach einem der obigen Ansprüche,
**dadurch gekennzeichnet,**
**dass** die Auswertungseinrichtung (9) zur Ermittlung des jeweiligen Fehlerwertes (PF) eines Streifens (13) ein (16) des jeweiligen Streifens (12) selektiert, dass das Segment (16) sich in Transportrichtung (x) des flachen Walzguts (2) gesehen über die gesamte Länge des jeweiligen Streifens (13) und in Breitenrichtung (y) des flachen Walzguts (2) gesehen über nur über einen Teil der Breite des jeweiligen Streifens (13) erstreckt und dass die Auswertungseinrichtung (9) die örtliche Frequenzanalyse nur bezüglich des Segments (16) des jeweiligen Streifens (13) durchführt.

7. Betriebsverfahren nach einem der obigen Ansprüche,
**dadurch gekennzeichnet,**
**dass** die Auswertungseinrichtung (9) vor der Durchführung der Frequenzanalyse eine Vorverarbeitung des jeweiligen zweidimensionalen Datensatzes (D) vornimmt.

8. Betriebsverfahren nach Anspruch 7,
**dadurch gekennzeichnet,**
**dass** die Datenwerte (D) Intensitätswerte sind und dass die Vorverarbeitung eine Normierung der Intensitätswerte bezüglich des maximal möglichen Wertebereichs der Werte des zweidimensionalen Datensatzes (D) und, bezogen auf den jeweiligen Streifen (13) oder ein Segment (16) des jeweiligen Streifens (13), eine Bereinigung um den Mittelwert (M) der Datenwerte (DW) des jeweiligen Streifens (13) bzw. Segments (16) umfasst.

9. Betriebsverfahren nach einem der obigen Ansprüche,
**dadurch gekennzeichnet,**
**dass** die Auswertungseinrichtung (9) den jeweiligen Fehlerwert (PF) unter Verwertung zumindest der Intensität (I0) und/oder der Ortsfrequenz (f0) der stärksten örtlichen Schwingung ermittelt.

10. Betriebsverfahren nach einem der obigen Ansprüche,
**dadurch gekennzeichnet,**
**dass** das flache Walzgut (2) in dem Walzgerüst (1) warmgewalzt wird oder kaltgewalzt wird.

11. Betriebsverfahren nach einem der obigen Ansprüche,
**dadurch gekennzeichnet,**
**dass** sich zwischen dem Walzgerüst (1) der Walzanordnung und der Erfassungseinrichtung (8) kein anderes Walzgerüst befindet.

12. Betriebsverfahren nach Anspruch 11,
**dadurch gekennzeichnet,**
**dass** das Walzgerüst (1) der Walzanordnung das einzige Walzgerüst eines Walzwerks, das letzte Walzgerüst einer mehrgerüstigen Walzstraße oder ein anderes als das letzte Walzgerüst einer mehrgerüstigen Walzstraße ist.

13. Computerprogramm, wobei das Computerprogramm Maschinencode (11) umfasst, der von einer Auswertungseinrichtung (9) einer Walzanordnung unmittelbar abarbeitbar ist, wobei die Abarbeitung des Maschinencodes (11) durch die Auswertungseinrichtung (9) bewirkt, dass die Auswertungseinrichtung (9) mit einer Erfassungseinrichtung (8), einer Steuereinrichtung (14) und einem Walzgerüst (1) der Walzanordnung gemäß einem Betriebsverfahren nach einem der obigen Ansprüche zusammenwirkt.

14. Auswertungseinrichtung einer Walzanordnung, wobei die Auswertungseinrichtung mit einem Computerprogramm (10) nach Anspruch 13 programmiert ist, so dass die Auswertungseinrichtung mit einer Erfassungseinrichtung (8), einer Steuereinrichtung (14) und einem Walzgerüst (1) der Walzanordnung gemäß einem Betriebsverfahren nach einem der Ansprüche 1 bis 12 zusammenwirkt.

15. Walzanordnung,
- wobei die Walzanordnung ein Planheitsstellglieder (5, 6) umfassendes Walzgerüst (1) aufweist, mittels dessen ein sich in einer Breitenrichtung (y) über eine Walzgutbreite (b) erstreckendes flaches Walzgut (2) aus Metall gewalzt wird und nach dem Walzen in einer Transportrichtung (x) aus dem Walzgerüst (1) herausgeführt wird,
- wobei die Walzanordnung eine kontaktlos und ohne mechanische Einwirkung auf das flache Walzgut (2) arbeitende Erfassungseinrichtung (8) aufweist, mittels derer auslaufseitig des Walzgerüsts (1) iterativ immer wieder mindestens ein zweidimensionaler Datensatz (D) der Oberfläche des flachen Walzguts (2) erfasst wird, dessen Werte (DW) von der lokal am jeweils korrespondierenden Ort des flachen Walzguts (2) herrschenden äußeren Planheit und/oder von der lokal am jeweils korrespondierenden Ort des flachen Walzguts (2) herrschenden inneren Spannung abhängig sind,
- die Walzanordnung eine mit der Erfassungseinrichtung (8) zum wiederholten Entgegennehmen von zweidimensionalen, mittels der Erfassungseinrichtung (8) erfassten Datensätzen (D) der Oberfläche des flachen Walzguts (2) datentechnisch verbundene Auswertungseinrichtung (9) gemäß Anspruch 14 aufweist, die für in Transportrichtung (x) verlaufende Streifen (13) des flachen Walzguts unter Verwertung von mit den Streifen (13) korrespondierenden Streifen (12) des jeweiligen zweidimensionalen Datensatzes (D) jeweils einen auf den jeweiligen Streifen (13) bezogenen vom Planheitsfehler abhängigen Fehlerwert (PF) ermittelt und die ermittelten Fehlerwerte (PF) einer Steuereinrichtung (14) der Walzanordnung zuführt,
- wobei die Steuereinrichtung (14) die ermittelten Fehlerwerte (PF) bei der Ermittlung von Stellgrößen (S) für die Planheitsstellglieder (5, 6) des Walzgerüsts (1) berücksichtigt.
